Europäisches Patentamt

(19) European Patent Office

Office européen des brevets

(11) EP 0 762 614 A2

(12) EUROPEAN PATENT APPLICATION

(43) Date of publication:
12.03.1997 Bulletin 1997/11

(51) Int. Cl.$^6$: H02K 9/06, H02K 5/14

(21) Application number: 96114193.4

(22) Date of filing: 04.09.1996

(84) Designated Contracting States:
DE FR GB IT

(30) Priority: 06.09.1995 JP 228936/95
27.09.1995 JP 248928/95

(71) Applicant: NIPPONDENSO CO., LTD.
Kariya-city Aichi-pref., 448 (JP)

(72) Inventors:
• Mukai, Takuzou
Kariya-city, Aichi-pref. 448 (JP)
• Mitani, Kenzo
Kariya-city, Aichi-pref. 448 (JP)

(74) Representative: KUHNEN, WACKER & PARTNER
Alois-Steinecker-Strasse 22
85354 Freising (DE)

(54) AC generator

(57) A labyrinth seal (64) is formed between a cylindrical portion (46) extending from a portion inside fan blades of a fan unit (7) and a cylindrical extension (61) of a brush holder unit which is secured to a housing (2) so that a cylindrical space (s) accommodating semicircular-metal-brushes and carbonaceous slip rings (41) is sealed. A plurality of fan blades and a member supporting the slip rings are made of a insulating resinous material in a unit and a brush holder (59), a bearing support (60) and a casing (62) of the voltage regulator (10) are combined in a unit by an insulting resinous material.

FIG.2

EP 0 762 614 A2

**Description**

BACKGROUND OF THE INVENTION

1. Field of the Invention

The present invention relates to an AC generator having a rotor coil, a collector connected to the rotor coil and a brush which slides on the outer peripheries of the collector.

2. Description of the Related Art

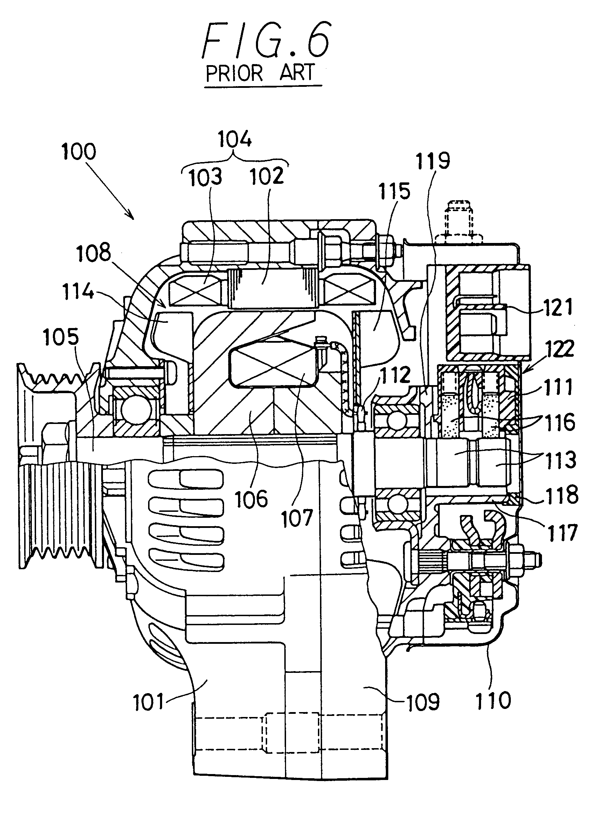

As shown in Fig. 6, a conventional vehicular alternator 100 has a stator 104 which is fixed to the inside of a front housing 101 and includes a stator core 102 with stator coils wound therearound, a rotor 106 which includes a rotor core 106 carried by a shaft 105 with a rotor coil wound therearound to rotate together and a brush holder 111 fixed between a rear housing 109 and rear cover 110.

The shaft 105 carries metal collectors (hereinafter referred to as slip rings) at the rear end thereof, which are connected to the rotor coil 107 through connection bars 112. Cooling fans 114 and 115 are fixed to both ends of the rotor core 106. The brush holder 111 includes outer connecting terminals (not shown) and a pair of carbon brushes (hereinafter referred to as brushes) 119 insert-molded together.

The portions (hereinafter referred to as interface) of the brushes 116 and the slip rings 113 in contact with each other is enclosed by a cylindrical member 117 of the rear housing 109 together with the brush holder 111 in order to prevent water and dust, and rubber packing 118 is disposed between the brush holder 111 and the cylindrical member 117 to seal them. A reference numeral 121 indicates a voltage regulator, a reference numeral 122 indicates the brush holder unit which is composed of the stator-side brushes and the packing 118.

However, in a conventional vehicular alternator 100, the brush holder unit 111 having the brush holder 116 therein is fixed to the separate rear housing 109 by a screw (not shown). That is, the circumference of the spring 113 is covered by the brush holder 111 and a bracket 119 of the rear housing 109, both ends of the brush holder unit are covered by the rear housing 109 and the rear cover 110. In other words, three gaps around the brush holder 111 have to be sealed.

Because the packing 118 is used to seal the brush holder 111 and the cylindrical portion 117, assembling in the axial direction is not so easy and sealing is not always complete. Further, because the cylindrical member 117 is made of an aluminum deceased together with the bracket 119 in a unit, burrs are formed on the die surfaces, which deteriorate sealing of the packing 118.

Further, the conventional carbon brushes 116 have to have an extra size and length in anticipation of the wear beforehand. In addition, in order to reduce the voltage drop of the field exciting circuit, the voltage regulator 121 is disposed near the brush unit 122. Accordingly, it is difficult to reduce the size of the vehicular alternator.

SUMMARY OF THE INVENTION

Therefore, a main object of the invention is to provide an improved and compact AC generator.

Another object of the present invention is to provide an AC generator which has a compact sealed space for the brushes.

For this purpose, a connecting unit which includes a slip ring, an insulating member and a brush, is disposed radially inside the centrifugal fan blades between the housing and rotor, and the slip ring and the brush is accommodated in a cylindrical member disposed around the shaft.

Accordingly, foreign particles such as water and dust are prevented from reaching the brushes or the collector ring, and the packing is removed without deteriorating sealing.

Another object of the present invention is to provide an AC generator which has compact and wear resistive brushes and a compact brush holder.

For this purpose, the brush comprises a semicircular arm member made from an elastic metal sheet to surround an outer periphery of said slip ring.

Because the metal brushes are not worn much, it is not necessary to have an extra size or length for the wear as in the conventional brushes. Thus, the brush can be made thinner so that the brush unit can be made light and compact drastically. Therefore, the size of the generator can be made small and light.

The thin elastic metal sheet provides a sufficient contact pressure of the brushes and stable current supply.

A further object of the present invention is to provide an AC generator which has an integral unit of a casing of voltage regulator, the brush holder and a cylindrical member for accommodating the brush and the slip ring.

BRIEF DESCRIPTION OF THE DRAWINGS

Other objects, features and characteristics of the present invention as well as the functions of related parts of the present invention will become clear from a study of the following detailed description, the appended claims and the drawings. In the drawings:

Fig. 1 is an enlarged plan view illustrating a main portion of the vehicular alternator according to a first embodiment of the present invention;
Fig. 2 is a cross-sectional view illustrating allover view of a vehicular alternator according to the first embodiment;
Fig. 3 is a plan view illustrating a main portion of the vehicular alternator according to the first embodiment;
Fig. 4 is a perspective view illustrating a collector ring and a brush unit according to the first embodiment;
Fig. 5 is a cross-sectional view illustrating allover view of a vehicular alternator according to a second embodiment of the present invention; and
Fig. 6 is a cross-sectional view illustrating a conventional vehicular alternator.

DETAILED DESCRIPTION OF THE PREFERRED EMBODIMENTS

(First Embodiment)

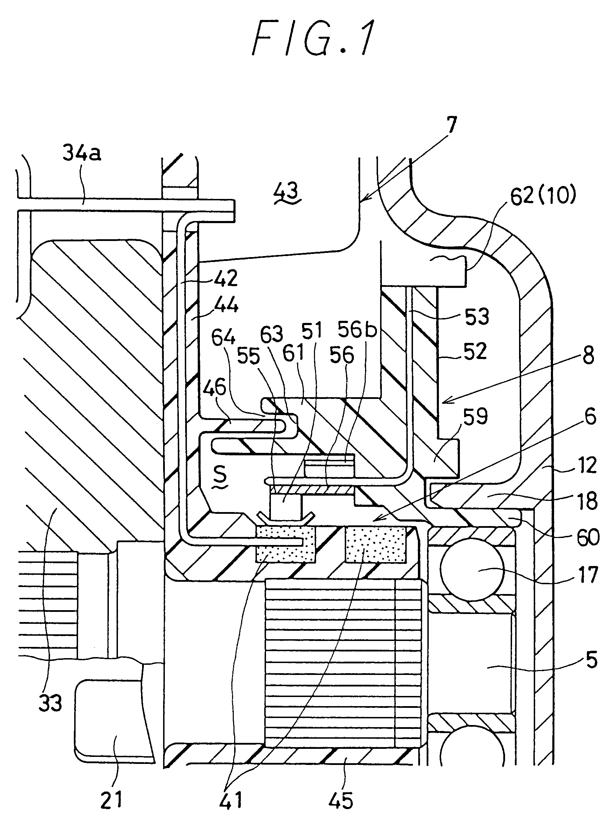

An AC generator for a vehicle according to a first embodiment of the present invention is described with reference to Figs. 1 to 4.

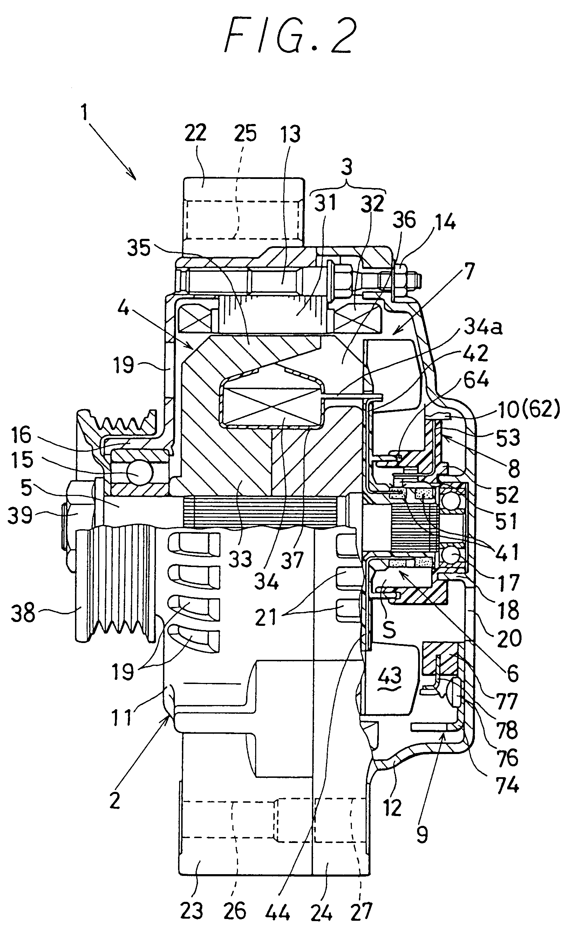

The vehicular alternator 1 is driven by an engine through a poly-V belt (not shown). AC current generated by the alternator is rectified by the three-phase rectifier 9 shown in Fig. 2 to DC current to charge a battery and energize electric loads. The vehicular alternator 1 is composed of a housing 2, a stator 3, a rotor 4, the collector unit 6, the brush unit 8, the three-phase rectifier 9 and the voltage regulator 10.

The housing 2 is composed of a front housing (or driving housing) 11 and a rear housing (or rear frame) 12, which are made of aluminum die-castings and fastened by a plurality of stud bolts 13 and nuts 14.

The front housing 11 has a front bearing 15 press-fitted to a boss portion 16 to rotatably support the front portion of the shaft 5. The rear housing 12 has a rear bearing 17 press-fitted to a boss portion 18 to rotatably support the rear portion of the shaft 5. A number of air-intake holes 19 are formed annularly in the front housings 11 to introduce cooling air therein and also a number of air-intake holes 20 and air-outlet holes 12 are formed annularly in the rear housing 12.

A stay 22 is formed integrally with an upper portion of the front housing 11 to be fixed to an upper bracket (not shown) of an engine and a stay 23 is formed integrally with a lower portion thereof to be fixed to a lower bracket (not shown) of the engine. A stay 24 is formed integrally with a lower portion of the rear housing 12 to be fixed to the lower bracket of the engine. These stays 22 - 24 have through holes 25 - 27 for bolts.

The stator 3 is composed of a stator core 31 secured to the inner periphery of the housing 2 and three-phase stator coils 32 wound around the stator core 31. The stator core 31 composes an armature core made of laminated sheets of a magnetic material and press-fitted to the inner periphery of the front housing 11. The stator core 31 has numbers of slots (not shown) formed at even intervals in the inner periphery thereof. The three-phase stator coils 32 are three-phase armature windings which are connected in the Y-connection or the Δ-connection to generate three-phase AC output power when the rotor 4 rotates. The coil ends of the stator coils 32 are soldered and connected to the three-phase rectifying circuit of the three-phase rectifier 9.

The rotor 4 provides the magnetic field and rotates together with the shaft 5. The rotor 4 is composed of the shaft 5, pole cores 33, a field coil 34 wound around the pole cores 33 and the collector unit 6 for supplying the field current to the field coil 34. The pole core (or rotor core) 33 has a field coil 34 wound via a coil bobbin 37 around the center thereof and made of a ferromagnetic material. The pole core 33 has claw poles 35 which become N-pole and other claw poles 36 which become S-pole when the field current is supplied to the field coil 34. A fan unit 7 is fixed to the rear surface of the claw poles 36 by welding or the like to take cooling air inside the housing 2. The field coil 34 is connected to connection bars (not shown) by soldering or the like. The shaft 5 is rotatably carried by boss portions 16 and 18 of the housing 2 via the front and rear bearings 15 and 17.

A V-ribbed pulley 38 is fastened to an end of the shaft 5 between a washer-faced nut 39 and the front bearing 15 to transmit the engine rotational torque to the shaft 5. The V-ribbed pulley 38 is connected to and driven by a pulley for the poly V-belt carried by the engine output shaft (crank shaft)through a poly V-belt or the like (not shown). A magnet clutch can be disposed between the shaft 5 and the V-ribbed pulley 38.

The collector unit 6 is composed of two carbonaceous collector rings (herein after referred to as slip ring) 41 connecting the battery, the voltage regulator 10 and the field coil 34 through the brush unit 8, two connection bars (or slip ring terminals) 42 connected to the slip rings 41 respectively and the insulating member 42 which is a resinous mold including the two slip rings 41 and two connection bars 42. The two slip rings 41 is composed of annular rings disposed on the outer periphery of the other end (rear portion) of the shaft 5 and connecting wires connecting the collector rings and connection bars. Each of the slip rings 41 is made of a carbonaceous (carbon) member such as a perforated copper alloy ring (as the host metal) in which powder of carbon, natural graphite electric graphite or metal graphite is impregnated. The connection bar 42 is, as shown in Fig. 1, connected to a terminal wire of the field coil 34 by soldering.

The fan unit 7 is formed of an insulating resinous material in a mold unit integral with the slip rings 41 and the connection bars 42. The fan unit 7 protects the wires connecting the two slip rings 41 and the two connection bars 42. The fan unit 7 is composed of a plurality of centrifugal fan blades 43, an annular fan-supporting-portion 44 supporting the fan blades 43 and a ring support 45 which is molded integrally with the slip rings 41 by insert-molding. The fan-supporting-portion 44 is fixed to the rear wall of the pole core 33 and a projecting portion 46 extends from the rear surface to face the brush unit 8. The ring support 45 is formed in a unit integral with the two slip rings 41 and two connection bars 42 and press-fitted to the outer periphery of the other side of the shaft 5. The insulating resinous material is a material having high insulating performance, high heat resistivity, high strength and high dimensional stability.

The brush unit 8 is composed of the two metal brushes 51 sliding on the outer periphery of the two slip rings 41, the brush holder 52 supporting and holding the brushes 51 and the connecting terminals 53 and 54 inserted in the mold portion of the brush holder 52.

The brushes 51 are made by stamping laminated metal sheets of a elastic metal, such as phosphor bronze or beryllium, to supply the field current to the field coil 34 through the two slip rings 41.

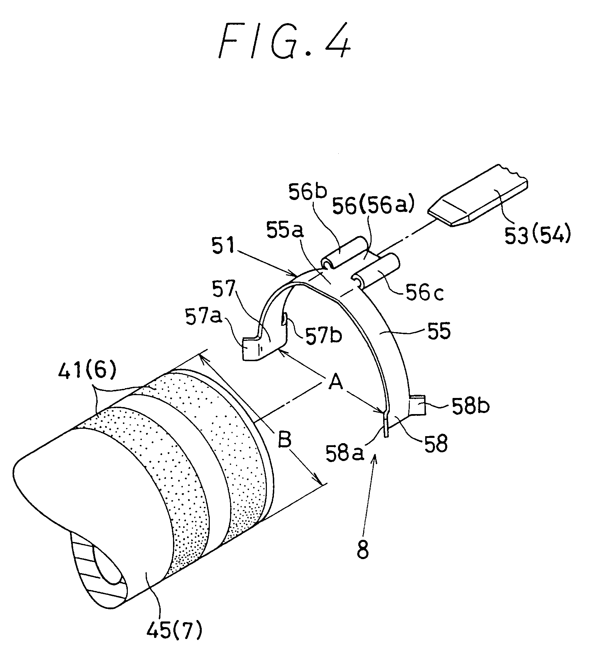

Each of the brushes 51 has a brush arm 55 surrounding one of the slip rings 41 and a clamp portion 56 axially extending from the brush arm 55 toward the brush holder 52. Two contact members 57 and 58 are formed on both ends or edges of the brush arm 55 to come in contact with the outer periphery of one of the slip rings 41. The brush arm 55 is, as shown in Fig. 4, is formed into a semicircular shape (horseshoe shape) so that it is biased against one of the slip rings 41 by the shrink due to the difference (B - A) distance between the two contact members 57 and 58 (between the arm distance) A and the diameter B of the slip ring 41.

Because, the brush arm 55 of the brushes 51 has the semicircular arm, the composite vector of the contact pressures of the brushes 51 applied to the outer periphery of the slip rings 41 becomes zero so that no contact pressure is applied to the clamp portion 56 which is mechanically fixed to the connecting terminals 53 and 54.

The contact members 57 and 58 provide the contact pressure by its elasticity. Four projections 57a, 57b, 58a and 58b extend from opposite ends of the contact members 57 and 58 in the axial direction. The four projections 57a, 57b, 58a and 58b extend from the opposite ends of the slip rings 41 in the opposite axial directions and bent or chamfered radially outward from the contact members 57 and 58. Therefore, the contact members 57 and 58 can move smoothly in the axial direction, and it is easy to install or remove the brushes 51 on or from the outer periphery of the slip rings 41.

The clamp portion 56, which is made of elastic copper alloy and is the same material as the metal brushes 43, is electrically and mechanically fixed to the connecting terminals 53 and 54 in a manner to utilize the spring characteristic. For this purpose, the clamp portion 56 is formed to have a minimum space for desired performance and manufacture.

The clamp portion 56, as shown in Fig. 4, has the projection 56a axially extending from the base portion (top portion) 55a of the brush arm 55 and clamp members 56b and 56c which are curled to form elliptic cylinders having deformable elasticity. Each of the clamp portions 56 holds each edge portion of the connecting terminals 53 and 54 between the projection 56a and the clamp members 56b and 56c.

The brush holder unit 52 is made of insulating resinous material (e.g. polyphenylene sulfide) and has a brush holder 59, bearing support 60, a cylindrical extension (or slip ring cover) 61 extending axially from the front portion of the brush holder 59 and a casing 62 of the voltage regulator 10 described later.

The brush holder 59 is molded integrally with the connecting terminals 53 and 54 so that both ends of the connecting terminals 53 and 54 extend to opposite directions respectively. The bearing support 60 is press-fitted to the inner periphery of the boss 18 of the rear housing 12, and the rear bearing 17 is press-fitted thereto. Therefore, the brush holder unit can be positioned correctly with respect to the shaft.

The extension 61 and the fan unit 7 forms a cylindrical space S between the fan unit 7 and the rear bearing 17 to enclose the two slip rings 41, the two brushes and their interfaces. The extension 61 is provided with a groove 63 on the surface facing the supporting portion 44 to receive the projecting portion 46 of the supporting portion 44 therein.

As a result, the groove 63 of the brush holder unit 52 forms a labyrinth seal 64 between the supporting portion and the extension 61. In other words, the sealed cylindrical space S is formed between the fan unit 7 and the rear bearing 17. The cylindrical extension 61 provides a smooth air-intake space at the central portion of the fan blades, ensuring effective cooling of the stator coil, field coil and the rectifiers.

When the cooling air is taken into the housing 2, a foreign particle such as water or dust may be taken in together. Especially, if such a foreign particle is taken into the rear housing 12 through the air intake holes 20, it may come to the interface of the slip rings 41 and the stator-side housing. However, because the cylindrical space S is sealed by the labyrinth seal 64, powder produced due to the friction of the slip rings 41 and the brushes 51 is prevented from getting in the housing 2.

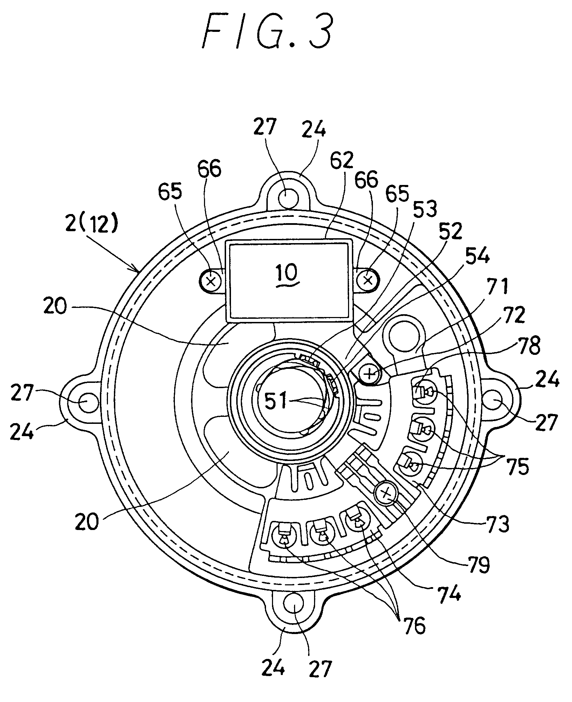

The connecting terminal 53 has a L-shaped cross-section and is formed integrally with a field current output terminal (not shown) of the voltage regulator 10. The connecting terminal 54 is has an inverted L-shaped cross-section so as to extend in the direction opposite to the connecting terminal 53. It is fastened to a DC output terminal 71 (shown in Fig. 3) of the rectifier 9 by a fixing screw 72 to be electrically connected thereto. The edge portions of the connecting terminals 53 and 54 are tapered so that they are inserted into a space between the projection 56a of the clamp portion 56 and clamp members 56b and 56c. The terminals 53 and 54 are made of a metal such as an aluminum alloy or a copper alloy. The metal of the connecting terminals 53 and 54 can be different from the metal of clamp portion 56 of the brushes 51 and, therefore, the production cost of the vehicular alternator 1 can be reduced. If the connecting terminals 53 and 54 are molded integrally with the brush holder 52, the connecting terminals 53 and 54 and the clamp portion 56 are mechanically connected after molding in order to prevent decrease of the wear resistivity of the brushes 51 due to temperature rise caused by the insert molding of the connecting terminals 53 and 54.

The three-phase rectifier 9 is composed of the DC output terminal 71, plus-side cooling fin 73, minus-side cooling fin 74, three-plus-side diodes 75, three minus-side diodes 76 and a terminal support 77.

The DC output terminal 71 has one end connected to the plus-terminal of a battery through an electric wire (not shown) and the other end fastened by fixing screws (not shown) to the connecting terminal 54 of the brush unit 8 and the plus-side cooling fin to be electrically connected thereto.

The plus-side cooling fin 73 and the minus-side cooling fin 74 are formed in a unit so that they surround the brush holder 52 and are disposed along the side wall of the rear housing 12. The plus-side cooling fin 73 is fixed to the inner side wall of the rear housing 12 via an insulating member (not shown). The minus side cooling fin 74 is grounded through the rear housing 12.

The terminal support 77, which is made of an insulating resinous material (e.g. PPS), has the three AC input terminals 78 molded integrally therewith and insulates the plus-side cooling fin 73 from the minus-side cooling fin 74. The terminal support 77 holds the plus-side cooling fin 73 and the minus side cooling fin 74 by a screw 79.

The voltage regulator 10 is composed of various outer connecting terminals (not shown) such as the field current output terminal, an integrated circuit (not shown) and a casing 62. The field current output terminal is molded integrally with the above-described metal member such as a copper alloy and held by the casing 62 and mechanically connected to the two brushes 51.

The casing 62, which is made of an insulating resinous material (e.g. PPS), is integral with the brush holder unit 52 and has a bracket 64 fixed to the rear housing 12. The casing 62 accommodates electric parts including the integrated circuit therein.

The generating operation of the vehicular alternator 1 is well known and, therefore, detailed description is omitted except for portions related to the present invention.

If the vehicular alternator 1 is operated for a long time, the two slip rings 41 and two brushes, which are mechanically fixed to the connecting terminals 53 and 54 held by the brush holder 52, move relative to and in contact with each other and worn away.

Since the slip rings 41 are made of carbonaceous material and self-lubricated, the coefficient of friction is small and the wear rate is small. In addition, the metal brushes 51 can reduce spring force so that the wear rate thereof is reduced drastically.

As described above, when the rotor 4 rotates inside the stator 3, the abrasion powder is produced from the two slip rings 41. However, because the space S accommodating the interface of the two slip rings and the two brushes 51 is sealed by the labyrinth seal 64, the abrasion powder is prevented from coming out of the cylindrical space S, so that the electric parts in the housing 2 ((such as parts of the three-phase rectifier 9, electronic parts of the voltage regulator 10, the three-phase stator coil 32 and the field coil 34) can be protected from deterioration of the insulation and grounding.

On the other hand, foreign particles such as water or dust coming inside the housing 2 are prevented from reaching the cylindrical space S can be also prevented.

In addition to the sealing effect, integration of the bearing support 60 and the brush holder 59 makes positioning of the brush holder 59 and the bearing support 60 unchanged and stable. Integration of the brush holder 59 and the casing 62, which are made from a resinous material, reduces number of molding dies. Integration by an insulating resinous material of the fan blades of the fan unit 7, supporting portion 44 and the ring support 45 reduces the number of molding dies. The slip rings 41 and connection bars 42 can be installed on the shaft 5 at the same time when the fan unit 7 and the ring support 45 are press-fitted to the rear wall of the pole core 33 and the outer periphery of the rear portion of the shaft 5. Accordingly, installation time of them to the rotor 4 can be reduced.

The resistivity of the vibration is generally expressed as follows according to a machine design book.

$$\text{Resistivity of Vibration} \propto \{(k \times \text{spring load})/(\text{weight of brushes})\} + \{\text{weight of spring}\} \qquad [\text{Eq. 1}]$$

Therefore, if the weight of the brushes (brush body) is reduced, the spring load of the brushes can be reduced.

The brushes 51 have functions of the spring and pigtail drastically reduce the weight of the brushes 51 and, particularly, the weight of the brush arm 55.

Since the spring load of the brushes 51 can be drastically reduced as compared with the conventional carbonaceous brushes 116, the wear rate of the brushes 51 and troubles due to the vibration of the brushes can be drastically reduced, resulting in increase of the life time of the brushes and the vehicular alternator 1.

If an excessive vibration is generated in a direction where the brush arm 55 of the brushes 51 leaves the slip rings 41, that is, the radial direction of the slip rings 41, the leaving contact member 57 (or 58) and the staying contact member 58 (or 57) assure the electric connection of the brushes 51 and the slip rings 41, thereby supplying stable field current to the field coil 34.

The connecting terminals 53 and 54 and the clamp portion 56 can be connected by welding, caulking or the like. However, it is preferable to connect them by insertion as shown in Fig. 4 because the brushes 51 are made of elastic copper alloy and it can provide minimum space for the performance and production.

Since the brushes 51, which are made of a metal member, are resistant to wear, it is not necessary to have the extra size and length as the conventional brushes 116 made of material easy to be abraded. As a result, the brushes can be made very thin and the brush holder 52 can be made drastically light and compact. Therefore, the brush unit can be disposed radially inside the fan blades between the fan unit 7 and the rear bearing 17, thereby providing smooth air intake space even if the voltage regulator 10 is disposed near the brushes 51. Accordingly, the diameter of the vehicular alternator 1 can be reduced and the length thereof can be also reduced.

Because the brushes 51 are made of a conductive metal, the portions of the brushes in contact with the slip rings 41 can be reduced without sacrificing the conductivity so that temperature rise of the brushes 51 can be restrained. Accordingly, the life time of the brushes 51 can be elongated. Although the slip rings 41 are made of a carbonaceous material, because the portions of the slip rings 41 in contact with the brushes 51 are a relatively small part of the entire periphery of the slip rings 41, the temperature rise is not significant to reduce the life time of the slip rings 41.

(Second Embodiment)

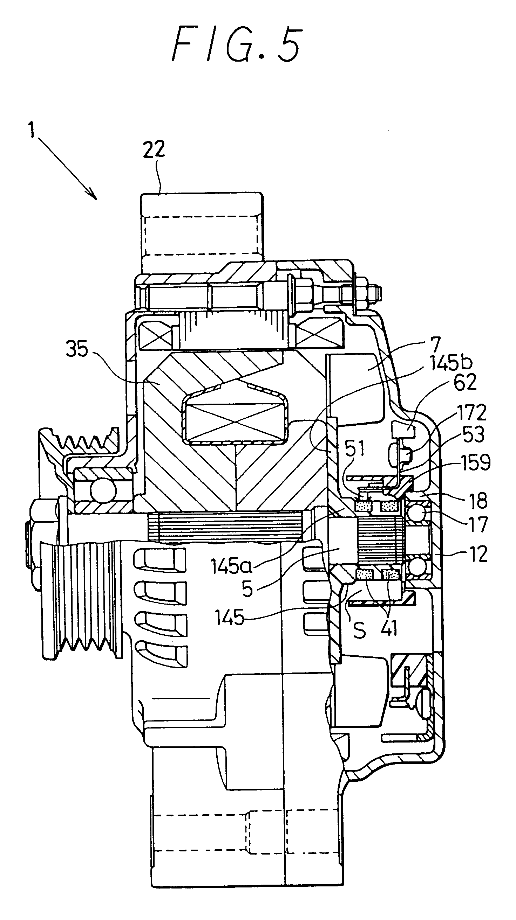

An AC generator according to a second embodiment is described with reference to Fig. 5, focussing only portions different from the AC generator according to the first embodiment.

In the meantime, the same reference numerals indicate the same or substantially the same portions or parts, and therefore the description thereof is omitted.

A brush holder unit is made of insulating resinous material (e.g. polyphenylene sulfide) and has an integral mold unit of a brush holder 159 the rear surface of which is in abutment with the front end of the boss portion 18, a cylindrical extension (or slip ring cover) 61 extending axially from the front portion of the brush holder 159 and a casing 62 of the voltage regulator 10. The cylindrical extention 61 faces the rear surface of the fan supporting portion 44 at a small gap, thereby forming a cylindrical space S between the fan uit 7 and the rear bearing to accommodate the slip rings and the brushes. The brush holder 159 is molded integrally with the connecting terminals 53.

[Variation]

The AC generator according to the above embodiments can be applied to a stationary AC generator for an electric power station of a building. It can be applied to a generator-motor also.

A pigtail can be integrally formed with each of the brushes and a separate spring can be used.

The brush holder unit 52, the casing of the voltage regulator 10 and the bearing support (bearing holder) 60 can be formed separately. It is possible that only the brush holder unit 52 and the voltage regulator 10 are combined in a unit.

The centrifugal fan can be replaced by an axial fan. It is possible to install the slip ring unit 6, the fan unit 7 and the brush unit 8 inside the front housing 11.

In the foregoing description of the present invention, the invention has been disclosed with reference to specific embodiments thereof. It will, however, be evident that various modifications and changes may be made to the specific embodiments of the present invention without departing from the broader spirit and scope of the invention as set forth in the appended claims. Accordingly, the description of the present invention in this document is to be regarded in an illustrative, rather than restrictive, sense.

**Claims**

1.  An AC generator comprising:

    a housing (2) having a bearing (17);
    a stator (3) supported by said housing (2) and having a stator coil and a stator core;
    a rotor (4) rotatably disposed in said housing (2) and having a shaft (5) carried by said bearing (17), a rotor core and a rotor coil;
    a fan unit (7) carried by said shaft (5) and having a plurality of fan blades annularly disposed on an end surface of said rotor (4); and
    a connecting unit disposed radially inside said blades between said housing (2) and said rotor (4) for establishing an electric supply passage to said rotor coil; said connecting unit having a slip ring (41) and a brush (51);

wherein said connecting unit further comprises

a cylindrical member, disposed around said shaft (5) and radially inside said blades, for accommodating said slip ring (41) and said brush (51) therein.

2. An AC generator as claimed in claim 1,
wherein said cylindrical member comprises:

a rotating member (46) projecting from said end surface of said rotor (4), and
a stationary member (61) extending from said housing (2) to face said rotating member (46) at a small gap.

3. An AC generator as claimed in claim 2,
wherein said rotating member (46) is disposed integral with said fan unit (7).

4. An AC generator as claimed in claim 2,
wherein said rotating member (46) is made of an insulating material integral with said slip ring (41).

5. An AC generator as claimed in claim 3,
wherein said rotating member (46) is made of an insulating material integral with said slip ring (41).

6. An AC generator as claimed in claim 2, wherein

said rotating member (46) comprises a cylindrical projection extending along said shaft (5),
said stationary member (61) comprises a brush holder (59), and
said rotating member (46) and stationary member (61) are disposed to overlap each other in an axial direction
to form a labyrinth seal.

7. An AC generator as claimed in claim 6,
wherein said brush holder comprises a bearing support (60) fixed to said housing (2) for supporting said bearing (17) directly.

8. An AC generator as claimed in claim 2 further comprising a labyrinth member (64) disposed between said rotating member (46) and said stationary member (61).

9. An AC generator as claimed in claim 2,
wherein said stationary member (61) comprises:

a brush holder (59) integral therewith, and
a terminal connected to said brush (51).

10. An AC generator as claimed in claim 9 further comprising an electric circuit (10),
wherein said brush holder (59) comprises a casing (62) for said electric circuit (10) integral therewith.

11. An AC generator as claimed in claim 10,
wherein said electric circuit (10) comprises a voltage regulator.

12. An AC generator as claimed in claim 2,
wherein said stationary member (61) is disposed in
contact with an outer periphery of said bearing (17).

13. An AC generator as claimed in claim 12, wherein

said cylindrical member is disposed between said bearing (17) and said housing (2); and
said stationary member (61) has one end closed by said bearing (17).

14. An AC generator as claimed in claim 1, wherein said brush (51) comprises an arm member (55) made from an elastic metal sheet to surround an outer periphery of said slip ring (41).

15. An AC generator as claimed in claim 14, wherein

EP 0 762 614 A2

said brush (51) comprises a clamp portion (56) secured to a portion inside said cylindrical member (61) and a contact member in contact with said slip ring (41) disposed at an end of said arm member (55).

16. An AC generator as claimed in claim 14,
wherein said brush (51) comprises:

a clamp portion (56) secured to a portion inside said stationary member (61) and
a pair of contact members (57, 58) in contact with said slip ring (41) disposed at opposite ends of said arm member (55).

17. An AC generator as claimed in claim 1, wherein

said connecting unit further comprises another slip ring (41) and another brush (51);
said slip rings (41) are disposed in parallel with each other along said shaft (5) and held by said insulating member; and
said brushes (51) are disposed in parallel with each other so that each one of them is in contact with one of said slip rings (41).

8

# FIG.1

# FIG.2

# FIG. 3

# FIG. 4

# FIG.5

# FIG.6
## PRIOR ART